# EUROPEAN PATENT SPECIFICATION

(11) **EP 2 863 743 B1**
(45) Date of publication and mention of the grant of the patent: **11.04.2018**
(21) Application number: 13727909.7
(22) Date of filing: 11.06.2013
(51) Int. Cl.: A01N 25/30, A01N 57/20, A01N 37/40, A01P 15/00, A01P 13/00

(54) **ADJUVANT COMPRISING A 2-PROPYLHEPTYLAMINE ALKOXYLATE, SUGAR-BASED SURFACTANT, AND DRIFT-CONTROL AGENT AND HUMECTANT**
ADJUVANS ENTHALTEND 2-PROPYLHEPTYLAMIN-ALKOXYLAT, ZUCKERBASIERTES TENSID UND ABDRIFTSTEUERUNGSMITTEL UND BEFEUCHTUNGSMITTEL
ADJUVANT COMPRENANT UN 2-PROPYLHEPTYLAMINE ALCOXYLATE, UN TENSIOACTIF À BASE DE SUCRE ET AGENT DE LUTTE CONTRE LA DÉRIVE ET UN HUMECTANT

(30) Priority: 21.06.2012 US 201261662387 P; 05.07.2012 EP 12175046
(43) Date of publication of application: 29.04.2015
(73) Proprietor: BASF SE, 67056 Ludwigshafen am Rhein (DE)
(72) Inventor: SCHNABEL, Gerhard, 63820 Elsenfeld (DE); NOLTE, Marc, 68165 Mannheim (DE); KLINGELHOEFER, Paul, 68165 Mannheim (DE); BRATZ, Matthias, 67133 Maxdorf (DE); ETCHEVERRY, Mariano Ignacio, 68165 Mannheim (DE); BOWE, Steven, Apex, NC 27523 (US); FRIHAUF, John, Raleigh, NC 27603 (US); THOMAS, Walter, Fuquay-Varina, NC 27526 (US); BROMMER, Chad, Raleigh, NC 27603 (US); CANNAN, Terrance M., Raleigh, North Carolina 27615 (US); STAAL, Maarten, Durham, NC 27703 (US)
(74) Representative: BASF IP Association
(86) International application number: PCT/EP2013/061975
(87) International publication number: WO 2013/189777

(56) References cited:
- WO-A1-2009/004044
- WO-A2-2010/068746
- CA-A1- 2 786 239
- US-A1- 2011 177 945

## Description

The present disclosure relates to an adjuvant comprising a sugar-based surfactant; a drift control agent and a humectant; and an alkoxylate, wherein the alkoxylate is an amine alkoxylate (A) or a quaternized derivative (AQ) of the amine alkoxylate (A) as defined below. It further relates to a method of preparing said adjuvant by contacting
the sugar-based surfactant; the drift control agent and the humectant; and the amine alkoxylate (A) or the quaternized derivative (AQ) of the amine alkoxylate (A); and to a method of controlling phytopathogenic fungi and/or undesired vegetation and/or undesired insect or mite attack and/or for regulating the growth of plants, wherein the tank mix according is allowed to act on the respective pests, their environment or the plants to be protected from the respective pest, on the soil and/or on undesired plants and/or the crop plants and/or their environment. The present invention comprises combinations of preferred features with other preferred features.
CA 2786239 A1 discloses compositions comprising alkoxylates of formula (A) and (AQ).
WO 2012/116939 discloses a concentrate comprising a 2-propylheptyl amine alkoxylate, a surfactant, and optionally adjuvants.
It was an object of the present invention to find an adjuvant which is well suited to pesticides, in particular herbicides such as glyphosate while being less toxic (especially lower toxicity to aquatic organisms). Furthermore, the adjuvant should make possible a storage-stable formulation of the pesticides. Another object was to increase the biological activity of the agrochemical composition. Finally, this adjuvant was to avoid phytotoxic side-effects.
The object was solved by an adjuvant comprising
a sugar-based surfactant; wherein the sugar-based surfactant contains alkyl polyglucosides;
a drift control agent comprising a fatty alcohol alkoxylate and a humectant; and an alkoxylate, wherein the alkoxylate is an amine alkoxylate (A) 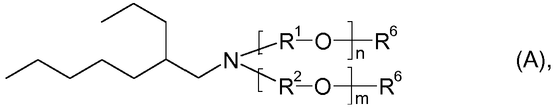 where
R¹ and R² independently of one another are ethylene, propylene, butylene or a mixture of these,
R⁶ is an H, C₁-C₆-alkyl, C₂-C₆-alkenyl, C₂-C₆-alkynyl, -SO₃R^{a}, -P(O)OR^{b}OR^{c}, -CH₂CO₂R^{d}, or - C(O)R^{e},
R^{a} and R^{d} independently of one another are an H, inorganic or organic cations,
R^{b} and R^{c} independently of one another are an H, inorganic or organic cations, C₁-C₆-alkyl, C₂-C₆-alkenyl or C₂-C₆-alkynyl,
R^{e} is C₁-C₂₂-alkyl, C₂-C₂₂-alkenyl, C₂-C₂₂-alkynyl, C₆-C₂₂-aryl or C₇-C₂₂-alkylaryl,
n, m independently of one another have a value of from 1 to 30.

Preferably, n has a value of from 1 to 20, especially preferably from 1 to 15, and in particular from 1 to 10. Preferably, **m** has a value of from 1 to 20, especially preferably from 1 to 15, and in particular from 1 to 10. Preferably, p has a value of from 1 to 30, especially preferably from 1 to 20. The values of n, m and o are normally average values as they mostly arise upon the alkoxylation with alkoxides. Therefore, n, m and o can not only be integers, but also all values between the integers.
Preferably, in the case of the amine alkoxylate (A), the **total of n and m** is 2 to 40.
In the case of the amine alkoxylate (A) the total of n and m is especially preferably 3 to 30, specifically preferably 3 to 15, and specifically 4 to 12. In a further especially preferred embodiment, the total of n and m is 2 to 9, in particular 3 to 7 and in particular 4 to 6. In a further especially preferred embodiment, the sum of n and m is 8 to 13, in particular 9 to 11.
**R¹, R²** are preferably independently of one another ethylene, ethylene and propylene, ethylene and butylene, or ethylene, propylene and butylene. In a further preferred embodiment, R¹, R² are propylene. In a further preferred embodiment, R¹, R² are butylene. Especially preferably R¹, R² independently of one another are ethylene, or ethylene and propylene. Very especially preferably, R¹, R² are ethylene.
If R¹, R² comprise a butylene radical, the latter may be present as a n-butylene, an isobutylene or a 2,3-butylene group, with n-butylene and isobutylene being preferred and n-butylene being most preferred.
R¹, R² independently of one another may be a mixture of ethylene, propylene or butylene. In this context, for example one or all radicals R¹, R² may comprise a mixture of these groups in each alkoxylate chain. Such mixtures can be linked to one another in any desired order, for example randomly or blockwise (such as one block ethylene and one block propylene). Also, it is possible for in each case one or more of the radicals R¹, R² to form a complete alkoxylate chain composed of different alkylene groups
**R⁶** is preferably an H or C₁-C₆-alkyl, more preferably an H or methyl, especially H.
**R^{a} and R^{d}** are independently of one another H, or inorganic or organic cations, which may be singly or multiply positively charged. Examples of inorganic cations are cations of ammonium, Na⁺, K⁺, Mg²⁺, Ca²⁺, or Zn²⁺. Examples of organic cations are methylammonium, dimethylammonium, trimethylammonium, tetramethylammonium, (2-hydroxyethyl)ammonium, bis(2-hydroxyethyl)ammonium, tris(2-hydroxyethyl)ammonium, tetra(2-hydroxyethyl)ammonium.
Preferably, R^{a} and R^{d} independently of one another are H or inorganic cations. If an inorganic or organic cation is present, then the associated anionic group would be formed by the corresponding functional group (e.g., -SO₃⁻, -P(O)O⁻O⁻, or -CH₂CO₂⁻) on R⁶.

**R^{b} and R^{c}** are preferably, independently of one another, H, inorganic or organic cations. Suitable inorganic or organic cations are those specified under R^{a}.
**R^{e}** is preferably C₁-C₁₂-alkyl, C₆-C₁₂-aryl, or C₇-C₁₂-alkylaryl, more preferably C₁-C₆-alkyl.
In a preferred embodiment R¹ and R² independently of one another are ethylene, ethylene and propylene, ethylene and butylene, or ethylene, propylene and butylene, and the total of n and m is 2 to 60, preferably 2 to 40, especially preferably 3 to 30 and in particular 5 to 25. In a very particularly preferred embodiment, R¹ and R² are ethylene, ethylene and propylene, ethylene and butylene, or ethylene, propylene and butylene and the total of n and m is 5 to 18, more particularly 8 to 12, and especially 9 to 11.
In a further preferred embodiment, R¹ and R² independently of one another are both **ethylene and propylene,** and the total of n and m is 2 to 60, preferably 3 to 30, especially preferably 5 to 20 and in particular 8 to 14. Preferably the alkoxylate comprises 1.5 to 8 mol (preferably 2 to 6 mol) of propylene oxide and 5 to 20 mol (preferably 7 to 13 mol) of ethylene oxide.
In a particularly preferred embodiment R¹ and R² are ethylene, and the total of n and m is 2 to 60, preferably 2 to 40, especially preferably 3 to 30, specifically preferably 5 to 18 and in particular 8 to 14.
The compounds (A) may be present as mixtures of stereoisomers or as isolated stereoisomers. Tautomers and betaines are likewise encompassed by the structures (A).
In most cases, the adjuvant according to the invention comprises from 1 to 50% by weight of the alkoxylate, preferably from2,5 to 40% by weight and in particular from 5 to 30% by weight.
The **sugar-based surfactant** contains alkyl polyglucosides. It may additionally contain a sugar, such as a mono-, di-, oligo-, and/or polysaccharide. Examples of additional sugar-based surfactants are sorbitans, ethoxylated sorbitans, or sucrose esters and glucose esters. The **alkyl polyglucosides** are usually mixtures of alkyl monoglucosides (e.g. alkyl-α-D- and -β-D-glucopyranoside, optionally containing smaller amounts of -glucofuranoside), alkyl diglucosides (e.g. -isomaltosides, -maltosides etc.) and alkyl oligoglucosides (e.g. -maltotriosides, - tetraosides etc.). Preferred alkyl polyglucosides are C₄₋₁₈-alkyl polyglucosides, more preferably C₆₋₁₄-alkyl polyglucosides, and in particular C₆₋₁₂-alkyl polyglucosides. The alkyl polyglucosides may have a D.P. (degree of polymerization) of from 1.2 to 1.9. More preferred are C₆₋₁₀-alkylpolyglycosides with a D.P. of from 1.4 to 1.9. The alkyl polyglycosides usually have a HLB value of 11,0 to 15,0, preferably of 12,0 to 14,0, and in particular from 13,0 to 14,0.
In another preferred form alkyl polyglucosides are C₆₋₈-alkyl polyglucosides. In another form, the alkyl polyglycosides (e.g. C₆₋₈-alkyl polyglucosides) have a HLB value according to Davies of at least 15, preferably at least 20.
The surface tension of the alkyl polyglucosides is usually 28 to 37 mN/m, preferably 30 to 35 mN/m, and in particular 32 to 35 mN/m and may be determined according to DIN53914 (25 °C, 0,1%).
Usually, the adjuvant comprises 1 to 50 wt%, preferably 5 to 40 wt%, and in particular 10 to 30 wt% of the sugar-based surfactant.
**Drift control agents** may be understood as chemical agents, which reduce the wind drift when spraying an aqueous tank mix composition. Drift control agents are commercially available from various companies (tradenames of the products given in brackets): Ag Spray, Inc. (Halt), Ashland Specialty Ingredients (Soilcare), Brewer International Inc. (Poly Control 2), Conklin Co. Inc. (Complete), Helena Chemical Co. (AccuQuest WM, AccuZone DC, Grounded, On-Line, Sta Put, Strike Zone, LineMan), Intracrop (Driftless), Kalo, Inc. (One AP XL, Spectra Tank Mix, Spectra Max), Loveland Products, Inc. (LI 700), Nalco Co. (Staput Plus), Precision Laboratories, Inc. (Border, Border Xtra, Direct, Transport Plus), Rhodia Inc. (AgRHO DEP, AgRHO DR), Sanitek Products, Inc. (SANAG Div.) (41-A, 38-F), Willowood USA (Willowood Driftguard), FORMULATORS' TRADE NAMES:, Brandt Consolidated, Inc. (Drift Free), Custom Agricultural Formulators (Driftstop), Loveland Products, Inc. (Compadre, Liberate, Reign, Reign LC, Weather Gard Complete), Wilbur-Ellis Co. (Bronc Max EDT, EDT Concentrate, In-Place), Winfield Solutions, LLC (Arrow four, Corral AMS, InterLock, Placement Propak, PowerLock), and various other discontinued commercial products, such as Apasil, Bivert, Chem-Trol, Confine, Corral Poly, Drifgon, Driftgard, Drop Zone, Intac Plus, Nalcotrol, Nalcotrol II, Nalquatic, Progacyl, Target, TMP, Wind-Fall. Examples of drift control agents are
- lecithin derivatives,
- linear nonionic polymers with a molecular weight of at least 20 kDa,
- guar gum,
- fatty alcohol alkoxylates.
Other examples of drift control agents are triblock copolymers of polyethylene glycol / polypropylene glycol /polyethylene glycol (so called EO/PO/EO triblock copolymers). Drift control agents according to the invention contain fatty alcohol alkoxylates. Suitable lecithin derivatives are lecithin or its chemically modified derivatives. Such drift control agents are for example commerically available as Liberate® or Compadre® from Loveland Products.

Suitable linear nonionic polymers with a molecular weight of at least 20 kDa, may be selected from polyacrylamide, polyacrylate, or a polyethylene glycol. Preferred nonionic poylmers are polyacrylamide and polyacrylate. The molecular weight of said nonionic polymers is usually at least 50 kDa, preferably at least 100 kDa, and in particular at least 1000 kDa.

Suitable guar gums are for example described in EP0660999, or are commercially available as AGRHO® DEP 775 or AGRHO® DR 200 from Rhodia.

Preferred fatty alcohol alkoxylates are fatty alcohol ethoxylates. The fatty alcohol may comprise a C₁₂₋₂₂, preferably a C₁₄₋₂₀, and in particular a C₁₆₋₁₈ fatty alcohol. The fatty alcohol may comprise a linear, saturated or unsaturated aliphatic alcohol. The fatty alcohol ethoxylate may comprise from 1 to 15, preferably from 1 to 8, and in particular from 2 to 6 equivalents of ethylene oxide. Especially suitable fatty alcohol ethoxylate is a C₁₄₋₂₀ fatty alcohol, which comprises from 2 to 6 equivalents of ethylene oxide.

In a more preferred form the drift control agent is a fatty alcohol alkoxylate, such as an alkoxylate of the formula (I)

R^{a}-O-(CₘH₂ₘ-O)ₙ-H (I)

wherein R^{a} is C₈-C₂₂-alkyl and/or -alkenyl, m is 2, 3, 4 or a mixture thereof, and n is from 1 to 15. The alkoxylates of the formula (I) are obtainable by common alkoxylation of alcohols R^{a}-OH, e.g. with ethylene oxide (resulting in m=2), propylene oxide, or butylene oxide.

R^{a} may be an alkyl, alkenyl or a mixture thereof. Preferably R^{a} is an alkenyl or a mixture of an alkenyl with an alkyl. In case R^{a} contains an alkenyl said alkenyl may comprise at least one double bond. R^{a} is preferably a C₁₂-C₂₀-alkyl and/or -alkenyl. More preferably R^{a} is C₁₆-C₁₈-alkyl and/or -alkenyl. Especially preferred R^{a} is oleyl and/or cetyl.

Preferably, m is 2, a mixture of 2 and 3, or a mixture of 2 and 4. In particular, m is 2.

Preferably, n is from 2 to 8. In particular, n is from 2 to 5.

In a very preferred form the drift control agent is an alkoxylate of the formula (I), wherein R^{a} is C₁₂-C₂₀-alkyl and/or -alkenyl, m is 2, a mixture of 2 and 3, or a mixture of 2 and 4, and n is from 2 to 8. In an even more preferred form the drift control agent is an alkoxylate of the formula (I), wherein R^{a} is C₁₆-C₁₈-alkyl and/or -alkenyl, m is 2, and n is from 2 to 5.

The drift control agent in form of a fatty alcohol alkoxylate may have a HLB value of 4,0 to 11,0, preferably of 6,0 to 10,0 and in particular of 8,0 to 10,0. In another particular preferred form the drift control agent (such as the alkoxylate of the formula (I)) has a HLB of 5,0 to 8,0, and most preferably from 6,0 to 7,0. The HLB may be determined according to Griffin.

The **(EO-PO-EO) triblock polymer** may be described by the general formula

HO(CH₂-CH₂O)ₓ-(CH(CH₃)-CH₂O)_{y}-(CH₂-CH₂O)₂H

wherein x, y and z may denote the degree of polymerization and thus determine the molecular weight. The triblock polymer may have an average molecular weight of at least 500 g/mol, preferably at least 1000 g/mol. The triblock polymer may have an average molecular weight of up to 10 000 g/mol, preferably up to 6000 g/mol. In another form, the triblock polymer may have an average molecular weight of 500 to 10 000 g/mol, preferably of 800 to 6000 g/mol, and in particular from 1500 to 5000 g/mol. The molecular weight may be determined based on the hydroxy number. The triblock polymer may have a surface tension of 30 to 45 mN/m, preferably of 32 to 43 mN/m, and in particular of 33 to 40 mN/m, at a concentration of 1 g/l in water at 23 °C.

In a particular preferred form the triblock polymer is a polyethyleneoxide polypropyleneoxide polyethyleneoxide (EO-PO-EO) triblock polymer. The polypropyleneoxide moiety in the EO-PO-EO triblock polymer may have a molar mass of 800 to 8000 g/mol, preferably from 1200 to 5000 g/mol, and in particular from 1500 to 4000 g/mol. The EO-PO-EO triblock polymer may contain 3 to 80 mol%, preferably 5 to 50 mol%, and in particular 5 to 20 mol% of the polyethyleneoxide moiety.

The adjuvant may comprise 1 to 45 wt%, preferably 5 to 35 wt%, and in particular 5 to 25 wt% of the drift control agent (e.g. of the fatty alcohol alkoxylate, such as the alkoxylate of the formula (I)).

**Humectans** are typically compounds, which attract and/or keep water within the adjuvant. Examples for humectants are glycerol, polyethylene glycols, or sugar syrups, wherein sugar syrups are preferred. In another preferred form the humectant contains glycerol.
Suitable **polyethylene glycols** may have a molecular weight of up to 10 kDa, preferably up to 1000 Da.

Suitable **sugar syrups** are syrups, which contain mono-, di-, and/or oligosaccharides. Examples are glucose syrup, maltitol syrup, maltose syrup and glucose-fructose-syrup, wherein the glucose-fructose-syrup is preferred. Preferred syrups contain at least 30 wt% fructose and at least 25 wt% glucose, more preferably at least 40 wt% fructose and at least 35 wt% glucose, wherein the wt% are on a dry basis. The sugar syrups may contain water, such as up to 40 wt%, preferably up to 30 wt%. Usually, the sugar syrups are based on corn hydrolysate (so called corn syrups).

The adjuvant may comprise 5 to 70 wt%, preferably 10 to 50 wt%, and in particular 15 to 40 wt% of the humectant (e.g. glycerol or sugar syrup). In a more preferred from the adjuvant may comprise 30 to 80 wt%, preferably 35 to 70 wt%, and in particular 40 to 65 wt% of the humectant (e.g. glycerol).

In a preferred form the adjuvant comprises a drift control agent and a humectant. Preferably, the drift control agent contains the fatty alcohol alkoxylate, such as the alkoxylate of the formula (I), and the humectant contains glycerol.

The adjuvant may optionally comprise an inorganic base. Examples for **inorganic bases** are a hydroxide, a silicate, a borate, an oxide, a carbonate, a phosphate, or mixtures thereof. Suitable **hydroxides** are alkaline, earth alkaline, or organic salts of hydroxides. Preferred hydroxides are NaOH, KOH and choline hydroxide, wherein KOH and choline hydroxide are preferred. Suitable **silicates** are alkaline or earth alkaline silicates, such as potassium silicates. Suitable **borates** are alkaline or earth alkaline borates, such as potassium, sodium or calcium borates. Fertilizers containing borates are also suitable. Suitable **oxides** are alkaline or earth alkaline oxides, such as calcium oxide or magnesium oxide. In a preferred form oxides are used together with chelating bases.

Preferably, the base is selected from a carbonate, a phosphate, or a mixture thereof. Preferably, the base is selected from an alkali salt of a carbonate, an alkali salt of hydrogencarbonate, or mixtures thereof. Alkali salts refer to salts containing preferably sodium and/or potassium as cations. The carbonate and the phosphate may be present in any crystall modification, in pure form, as technical quality, or as hydrates (e.g. K₂CO₃ x 1,5 H₂O).

Suitable **carbonates** are alkali or earth alkaline salts of CO₃²⁻ or of HCO₃⁻ (hydrocarbonates). Preferred carbonates are alkali salts of CO₃²⁻ or of HCO₃⁻. Especially preferred carbonates are selected from sodium carbonate, sodium hydrogencarbonate, potassium carbonate, potassium hydrogencarbonate, and mixtures thereof.

Mixtures of carbonates are also possible. Preferred mixtures of carbonates comprise alkali salts of CO₃²⁻ and alkali salts of HCO₃⁻. Especially preferred mixtures of carbonates comprise potassium carbonate and potassium hydrogencarbonate; or sodium carbonate and sodium hydrogencarbonate. The weight ratio of alkali salts of CO₃²⁻ (e.g. K₂CO₃) to alkali salts of HCO₃⁻(e.g. KHCO₃) may be in the range of 1:20 to 20:1, preferably 1:10 to 10:1. In another form, the weight ratio of alkali salts of CO₃²⁻ (e.g. K₂CO₃) to alkali salts of HCO₃⁻ (e.g. KHCO₃) may be in the range of 1:1 to 1:25, preferably of 1:2 to 1:18, and in particular of 1:4 to 1:14.

Suitable **phosphates** are alkaline or earth alkaline salts of secondary or tertiary phosphates, pyrrophosphates, and oligophosphates. Alkali salts of phosphates are preferred, such as Na₃PO₄, Na₂HPO₄, and NaH₂PO₄, and mixtures thereof.

The base has preferably has a **solubility** in water of at least 1 g/l at 20 °C, more preferably of at least 10 g/l, and in particular at least 100 g/l.

The base and the further base may be present in dispersed or dissolved form in the adjuvant, wherein the dissolved form is preferred.

The adjuvant may comprise 3 to 50 wt%, preferably 5 to 40 wt%, and in particular 10 to 30 wt% of the base.

The adjuvant is essentially **free of pesticides.** This means, that the adjuvant usually contains less than 1 wt%, preferably less than 0,2 wt%, and in particular less than 0,05 wt% of a pesticide.

The adjuvant may be liquid or solid, preferably it is a liquid at 20 °C. Preferably, the adjuvant is a homogenous liquid, which means that it consists of only one liquid phase.

The adjuvant may comprise **further auxiliaries.** Typically, the adjuvant contains up to 30 wt%, preferably up to 15 wt%, and in particular up to 5 wt% of further auxiliaries.

Examples for further **auxiliaries** are solvents, liquid carriers, surfactants, dispersants, emulsifiers, wetters, solubilizers, penetration enhancers, protective colloids, adhesion agents, thickeners, repellents, compatibilizers, bactericides, anti-freezing agents, anti-foaming agents, colorants.

Suitable **solvents** and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable **surfactants** are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid. Examples of surfactants are listed in McCutcheon's, Vol.1: Emulsifiers & Detergents, McCutcheon's Directories, Glen Rock, USA, 2008 (International Ed. or North American Ed.).

Suitable **anionic** surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable **nonionic** surfactants are alkoxylates, N-subsituted fatty acid amides, amine oxides, esters, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsititued fatty acid amides are fatty acid glucamides or fatty acid alkanolamides. Examples of esters are fatty acid esters, glycerol esters or monoglycerides. The drift control agents in form of the fatty alcohol alkoxylates as defined above are usually not considered nonionic surfactants.

The adjuvant may contain at least one auxiliary selected from nonionic surfactants, such as alkoxylates. Preferably the auxiliary comprises an branched alcohol, which has been alkoxylated with 1 to 50 equivalents (preferably 1.3 to 25, more preferably 1.6 to 10, and in particular 2 to 5 equivalents) of ethylene oxide and/or propylene oxide (so called branched alcohol alkoxylate). Typically, the branched alcohol alkoxylate is based on a branched C₆ to C₂₀ alkanol, preferably a branched C₈ to C₁₄ alkanol, or mixtures of said branched alkanols.

The adjuvant may contain up to 25 wt%, preferably up to 15 wt% of the branched alcohol alkoxylate. The adjuvant may contain from 1 to 15 wt%, preferably from 1 to 10 wt% of the branched alcohol alkoxylate.

Suitable **cationic** surfactants are quaternary surfactants, for example quaternary ammonium compounds with one or two hydrophobic groups, or salts of long-chain primary amines. Suitable **amphoteric** surfactants are alkylbetains and imidazolines.

Suitable **thickeners** are polysaccharides (e.g. xanthan gum, carboxymethylcellulose), anorganic clays (organically modified or unmodified), polycarboxylates, and silicates.

Suitable **bactericides** are bronopol and isothiazolinone derivatives such as alkylisothiazolinones and benzisothiazolinones.

Suitable **anti-foaming agents** are silicones, long chain alcohols, and salts of fatty acids.

Suitable **colorants** (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

In a preferred form the adjuvant comprises
5 to 40 wt% of the sugar-based surfactant (e.g. the C₆₋₁₈-alkyl polyglucoside);
5 to 35 wt% of the drift control agent (e.g. the fatty alcohol ethoxylate);
5 to 40 wt% of the alkoxylate (e.g. the amine alkoxylate (A)), and optionally further auxiliaries, wherein the amounts of all components sum up to 100 wt%.

In another preferred form the adjuvant comprises
5 to 40 wt% of the sugar-based surfactant (e.g. the C₆₋₁₈-alkyl polyglucoside);
5 to 50 wt% of the humectant (e.g. the corn syrup); and
5 to 40 wt% of the alkoxylate (e.g. the amine alkoxylate (A)), and optionally further auxiliaries, wherein the amounts of all components sum up to 100 wt%.

In a more preferred form the adjuvant comprises
5 to 40 wt% of the sugar-based surfactant (e.g. the C₆₋₁₈-alkyl polyglucoside);
30 to 75 wt% of the humectant (e.g. the glycerol and/or the corn syrup); and
5 to 40 wt% of the alkoxylate (e.g. the amine alkoxylate (A)), and optionally up to 15 wt% further auxiliaries (e.g. the branched alcohol alkoxylate), wherein the amounts of all components sum up to 100 wt%.

In an even more preferred form the adjuvant comprises
10 to 35 wt% of the sugar-based surfactant (e.g. the C₆₋₁₈-alkyl polyglucoside);
35 to 70 wt% of the humectant (e.g. the glycerol);
10 to 35 wt% of the alkoxylate (e.g. the amine alkoxylate (A)); and optionally 1 to 10 wt% further auxiliaries (e.g. the branched alcohol alkoxylate), wherein the amounts of all components sum up to 100 wt%.

In another more preferred form the adjuvant comprises
5 to 40 wt% of the sugar-based surfactant (e.g. the C₆₋₁₈-alkyl polyglucoside);
30 to 75 wt% of the humectant (e.g. the glycerol and/or the corn syrup);
2 to 25 wt% of the drift control agent (e.g. the fatty alcohol alkoxylate, such as the alkoxylate of the formula (I));
5 to 40 wt% of the alkoxylate (e.g. the amine alkoxylate (A)), and optionally up to 15 wt% further auxiliaries (e.g. the branched alcohol alkoxylate), wherein the amounts of all components sum up to 100 wt%.

In an even more preferred form the adjuvant comprises
10 to 35 wt% of the sugar-based surfactant (e.g. the C₆₋₁₈-alkyl polyglucoside);
35 to 70 wt% of the humectant (e.g. the glycerol);
2 to 15 wt% of the drift control agent (e.g. the fatty alcohol alkoxylate, such as the alkoxylate of the formula (I));
10 to 35 wt% of the alkoxylate (e.g. the amine alkoxylate (A)); and optionally 1 to 10 wt% further auxiliaries (e.g. the branched alcohol alkoxylate), wherein the amounts of all components sum up to 100 wt%.

The present invention further relates to a method of **preparing the adjuvant** according to the invention by contacting the sugar-based surfactant; the drift control agent and/or the humectant; and the amine alkoxylate (A) or the quaternized derivative (AQ) of the amine alkoxylate (A).

The present invention further relates to a method for **preparing a tank mix,** which comprises the step of contacting a pesticide, water, and the adjuvant according to the invention.

The term **pesticide** refers to at least one active substance selected from the group of the fungicides, insecticides, nematicides, herbicides, safeners, molluscicides, rodenticides and/or growth regulators. Preferred pesticides are fungicides, insecticides, herbicides and growth regulators. Especially preferred pesticides are herbicides and growth regulators. Mixtures of pesticides from two or more of the abovementioned classes may also be used. The skilled worker is familiar with such pesticides, which can be found, for example, in Pesticide Manual, 15th Ed. (2009), The British Crop Protection Council, London. The pesticides may also comprise salts, esters, optical isomers or tautomers. Suitable pesticides are (groups A) to M) are fungicides):
A) Respiration inhibitors
   - complex-III-inhibitors at the Qₒ-site (for example strobilurins): azoxystrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, methyl 2-[2-(2,5-dimethylphenyloxymethyl)phenyl]-3-methoxyacrylate, 2-(2-(3-(2,6-dichlorophenyl)-1-methylallylideneaminooxymethyl)phenyl)-2-methoxyimino-N-methylacetamide, pyribencarb, triclopyricarb/chlorodincarb, famoxadon, fenamidon;
   - Complex-III-inhibitors of the Qᵢ-site: cyazofamid, amisulbrom;
   - Complex-II-inhibitors (for example carboxamides): benodanil, bixafen, boscalid, carboxin, fenfuram, fluopyram, flutolanil, fluxapyroxad, furametpyr, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1 H-pyrazole-4-carboxamide and N-(2-(1,3,3-trimethylbutyl)phenyl)-1,3-dimethyl-5-fluoro-1H-pyrazole-4-carboxamide;
   - other respiration inhibitors (for example complex I, uncouplers): diflumetorim; nitrophenyl - derivatives: binapacryl, dinobuton, dinocap, fluazinam; ferimzone; organometal compounds: fentin salts such as fentin acetate, fentin chloride or fentine hydroxide; ametoctradin; and silthiofam;
B) Sterol biosynthesis inhibitors (SBI fungicides)
   - C14-Demethylase inhibitors (DMI fungicides):
   - triazoles: azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole; imidazoles: imazalil, pefurazoate, prochloraz, triflumizole; pyrimidines, pyridines and piperazines: fenarimol, Nuarimol, pyrifenox, triforine;
   - delta14-reductase inhibitors: aldimorph, dodemorph, dodemorph acetate, fenpropimorph, tridemorph, fenpropidin, piperalin, spiroxamine; 3-ketoreductase inhibitors: fenhexamid;
C) Nucleic acid synthesis inhibitors
   - phenylamides or acylamino acid fungicides: benalaxyl, benalaxyl-m, kiralaxyl, metalaxyl, metalaxyl-m (mefenoxam), ofurace, oxadixyl;
   - others: hymexazole, octhilinone, oxolinic acid, bupirimate;
D) cell division and cytoskeleton inhibitiors
   - tubulin inhibitors such as benzimidazoles, thiophanates: benomyl, carbendazim, fuberidazole, thiabendazole, thiophanate-methyl; triazolopyrimidines: 5-chloro-7-(4-methyl-piperidin-1-yl)-6-(2,4,6-trifluorophenyl)-[1,2,4]triazolo[1,5-a]pyrimidine;
   - further cell division inhibitors: diethofencarb, ethaboxam, pencycuron, fluopicolid, zoxamid, metrafenon, pyriofenon;
E) Amino acid synthesis and protein synthesis inhibitors
   - methionine synthesis inhibitors (anilinopyrimidine): cyprodinil, mepanipyrim, pyrimethanil;
   - protein synthesis inhibitors: blasticidin-S, kasugamycin, kasugamycin hydrochloride hydrate, mildiomycin, streptomycin, oxytetracyclin, polyoxin, validamycin A;
F) Signal transduction inhibitors
   - MAP/histidine kinase inhibitors: fluoroimide, iprodione, procymidone, vinclozolin, fenpiclonil, fludioxonil;
   - G-protein inhibitors: quinoxyfen;
G) Lipid and membrane synthesis inhibitors
   - Phospholipid biosynthesis inhibitors: edifenphos, iprobenfos, pyrazophos, isoprothiolane;
   - Lipid peroxidation: dicloran, quintozene, tecnazene, tolclofos-methyl, biphenyl, chloroneb, etridiazole;
   - Phospholipid biosynthesis and cell wall attachment: dimethomorph, flumorph, mandipropamid, pyrimorph, benthiavalicarb, iprovalicarb, valifenalate and 4-fluorophenyl N-(1-(1-(4-cyanophenyl)ethanesulfonyl)but-2-yl)carbamate;
   - Compounds which affect cell membrane permeability and fatty acids: propamocarb, propamocarbhydrochloride
H) "Multi-Site" inhibitors
   - inorganic active substances: Bordeaux mixture, copper acetate, copper hydroxide, copper oxychloride, basic copper sulfate, sulfur; Thio- and dithiocarbamates: ferbam, mancozeb, maneb, metam, metiram, propineb, thiram, zineb, ziram;
   - organochlorine compounds (for example phthalimides, sulfamides, chloronitriles): anilazine, chlorothalonil, captafol, captan, folpet, dichlofluanid, dichlorophen, flusulfamide, hexachlorobenzene, pentachlorophenol and its salts, phthalid, tolylfluanid, N-(4-chloro-2-nitrophenyl)-N-ethyl-4-methylbenzenesulfonamide;
   - guanidines and others: guanidine, dodine, dodine free base, guazatin, guazatin acetate, iminoctadin, iminoctadin triacetate, iminoctadin tris(albesilate), dithianon;
I) Cell wall biosynthesis inhibitors
   - glucan synthesis inhibitors: validamycin, polyoxin B; melanin synthesis inhibitors: pyroquilon, tricyclazole, carpropamid, dicyclomet, fenoxanil;
J) Resistence inductors
   - acibenzolar-S-methyl, probenazol, isotianil, tiadinil, prohexadione-calcium; phosphonates: fosetyl, fosetyl-aluminum, phosphorous acid and its salts;
K) Unknown mode of action
   - bronopol, quinomethionate, cyflufenamid, cymoxanil, dazomet, debacarb, diclomezin, difenzoquat, difenzoquat-methyl sulfate, diphenylamine, fenpyrazamine, flumetover, flusulfamid, flutianil, methasulfocarb, nitrapyrin, nitrothal-isopropyl, oxine-copper, proquinazid, tebufloquin, tecloftalam, triazoxide, 2-butoxy-6-iodo-3-propylchromene-4-one, N-(cyclopropylmethoxyimino-(6-difluoromethoxy-2,3-difluorophenyl)methyl)-2-phenyl-acetamide, N'-(4-(4-chloro-3-trifluoromethylphenoxy)-2,5-dimethylphenyl)-N-ethyl-N-methylformamidine, N'-(4-(4-fluoro-3-trifluoromethylphenoxy)-2,5-dimethylphenyl)-N-ethyl-N-methylformamidine, N'-(2-methyl-5-trifluoromethyl-4-(3-trimethylsilanylpropoxy)phenyl)-N-ethyl-N-methylformamidine, N'-(5-difluoromethyl-2-methyl-4-(3-trimethylsilanyl-propoxy)phenyl)-N-ethyl-N-methylformamidine, N-methyl-(1,2,3,4-tetrahydronaphthalen-1-yl)-2-{1-[2-(5-methyl-3-trifluoromethylpyrazol-1-yl)acetyl]piperidin-4-yl}thiazole-4-carboxylate, N-methyl-(R)-1,2,3,4-tetrahydronaphthalen-1-yl2-{1-[2-(5-methyl-3-trifluoromethylpyrazol-1-yl)acetyl]piperidin-4-yl}thiazole-4-carboxylate, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1H-pyrazol-1-yl]ethanone, 6-tert-butyl-8-fluoro-2,3-dimethylquinolin-4-yl methoxyacetate, *N*-methyl-2-{1-[(5-methyl-3-trifluoromethyl-1H-pyrazol-1-yl)acetyl]piperidin-4-yl}-*N*[(1R)-1,2,3,4-tetrahydronaphthalen-1-yl]-4-thiazolecarboxamide, 3-[5-(4-methylphenyl)-2,3-dimethylisoxazolidin-3-yl]-pyridine, 3-[5-(4-chlorophenyl)-2,3-dimethylisoxazolidin-3-yl]-pyridine (pyrisoxazol), N-(6-methoxypyridin-3-yl) cyclopropanecarboxamide, 5-chloro-1-(4,6-dimethoxypyrimidin-2-yl)-2-methyl-1H-benzoimidazole, 2-(4-chlorophenyl)-N-[4-(3,4-dimethoxyphenyl)isoxazol-5-yl]-2-prop-2-ynyloxyacetamide;
L) **Biological fungicides,** plant strengthening agents
   - *Ampelomyces quisqualis* (for example the product AQ 10® from Intrachem Bio GmbH & Co. KG, Germany), *Aspergillus flavus* (for example the product AFLAGUARD® from Syngenta, Switzerland), *Aureobasidium pullulans* (for example the product BOTECTOR® from bio-ferm GmbH, Germany), *Bacillus pumilus* (for example strain NRRL No. B-30087 in SONATA® and BALLAD® Plus from AgraQuest Inc., USA), *Bacillus subtilis* (for example strain NRRL-No. B-21661 in RHAPSODY®, SERENADE® MAX and SERENADE® ASO from AgraQuest Inc., USA), *Bacillus subtilis* var. *amyloliquefaciens* FZB24 (for example the product TAEGRO® from Novozyme Biologicals, Inc., USA), *Candida oleophila* I-82 (for example the product ASPIRE® from Ecogen Inc., USA), *Candida saitoana* (for example the products BIOCURE® (in admixture with lysozym) and BIOCOAT® from Micro Flo Company, USA (BASF SE) and Arysta), chitosan (for example ARMOUR-ZEN from BotriZen Ltd., New Zealand), *Clonostachys rosea* f. *catenulata,* also known as *Gliocladium catenulatum* (for example J1446: PRESTOP® from Verdera, Finland), *Coniothyrium minitans* (for example the product CONTANS® from Prophyta, Germany), *Cryphonectria parasitica* (for example the product *Endothia parasitica* from CNICM, France), *Cryptococcus albidus* (for example the product YIELD PLUS® from Anchor Bio-Technologies, South Africa), *Fusarium oxysporum* (for example the products BIOFOX® from S.I.A.P.A., Italy, and FUSACLEAN® from Natural Plant Protection, France), *Metschnikowia fructicola* (for example the product SHEMER® from Agrogreen, Israel), *Microdochium dimerum* (for example the product ANTIBOT® from Agrauxine, France), *Phlebiopsis gigantea* (for example the product ROTSOP® from Verdera, Finland), *Pseudozyma flocculosa* (for example the product SPORODEX® from Plant Products Co. Ltd., Canada), *Pythium oligandrum* DV74 (for example the product POLYVERSUM® from Remeslo SSRO, Biopreparaty, Czech Republic), *Reynoutria sachlinensis* (for example the product REGALIA® from Marrone Biolnnovations, USA), *Talaromyces flavus* V117b (for example the product PROTUS® from Prophyta, Germany), *Trichoderma asperellum* SKT-1 (for example the product ECO-HOPE® from Kumiai Chemical Industry Co., Ltd., Japan), *T*. *atroviride* LC52 (for example the product SENTINEL® from Agrimm Technologies Ltd, New Zealand), *T. harzianum* T-22 (for example the product PLANTSHIELD® from BioWorks Inc., USA), *T. harzianum* TH 35 (for example the product ROOT PRO® from Mycontrol Ltd., Israel), *T. harzianum* T-39 (for example the products TRICHODEX® and TRICHODERMA 2000® from Mycontrol Ltd., Israel and Makhteshim Ltd., Israel), *T. harzianum* and *T. viride* (for example the product TRICHOPEL from Agrimm Technologies Ltd, New Zealand), *T. harzianum* ICC012 and *T. viride* ICC080 (for example the product REMEDIER® WP from Isagro Ricerca, Italy), *T. polysporum* and *T. harzianum* (for example the product BINAB® from BINAB Bio-Innovation AB, Sweden), *T. stromaticum* (for example the product TRICOVAB® from C.E.P.L.A.C., Brazil), *T. virens* GL-21 (for example the product SOILGARD® from Certis LLC, USA), *T. viride* (for example the products TRIECO® from Ecosense Labs. (India) Pvt. Ltd., India and BIO-CURE® F from T. Stanes & Co. Ltd., India), *T. viride* TV1 (for example the product T. viride TV1 from Agribiotec srl, Italy), *Ulocladium oudemansii* HRU3 (for example the product BOTRY-ZEN® from Botry-Zen Ltd, New Zeland);
**M) growth regulators**
   abscisic acid, amidochlor, ancymidole, 6-benzylaminopurine, brassinolide, butralin, chlormequat (chlormequat chloride), choline chloride, cyclanilid, daminozide, dikegulac, dimethipin, 2,6-dimethylpuridine, ethephon, flumetralin, flurprimidol, fluthiacet, forchlorfenuron, gibberellic acid, inabenfid, indole-3-acetic acid, maleic hydrazide, mefluidid, mepiquat (mepiquat chloride), metconazole, naphthaleneacetic acid, N-6-benzyladenine, paclobutrazole, prohexadione (prohexadione-calcium), prohydrojasmone, thidiazuron, triapenthenol, tributylphosphorotrithioate, 2,3,5-triiodobenzoic acid, trinexapac-ethyl and uniconazole;
**N) herbicides**
   - acetamide: acetochlor, alachlor, butachlor, dimethachlor, dimethenamid, flufenacet, mefenacet, metolachlor, metazachlor, napropamid, naproanilid, pethoxamid, pretilachlor, propachlor, thenylchlor;
   - amino acid analogs: bilanafos, glyphosate, glufosinate, sulfosate;
   - aryloxyphenoxypropionates: clodinafop, cyhalofop-butyl, fenoxaprop, fluazifop, haloxyfop, metamifop, propaquizafop, quizalofop, quizalofop-P-tefuryl;
   - bipyridyls: diquat, paraquat;
   - carbamates and thiocarbamates: asulam, butylate, carbetamide, desmedipham, dimepiperat, eptam (EPTC), esprocarb, molinate, orbencarb, phenmedipham, prosulfocarb, pyributicarb, thiobencarb, triallate;
   - cyclohexanediones: butroxydim, clethodim, cycloxydim, profoxydim, sethoxydim, tepraloxydim, tralkoxydim;
   - dinitroanilines: benfluralin, ethalfluralin, oryzalin, pendimethalin, prodiamine, trifluralin;
   - diphenyl ethers: acifluorfen, aclonifen, bifenox, diclofop, ethoxyfen, fomesafen, lactofen, oyfluorfen;
   - hydroxybenzonitriles: bromoxynil, dichlobenil, ioxynil;
   - imidazolinones: imazamethabenz, imazamox, imazapic, imazapyr, imazaquin, imazethapyr;
   - phenoxyacetic acids: clomeprop, 2,4-dichlorophenoxyacetic acid (2,4-D), 2,4-DB, dichlorprop, MCPA, MCPA-thioethyl, MCPB, mecoprop;
   - pyrazines: chloridazon, flufenpyr-ethyl, fluthiacet, norflurazon, pyridate;
   - pyridines: aminopyralid, clopyralid, diflufenican, dithiopyr, fluridone, fluroxypyr, picloram, picolinafen, thiazopyr;
   - sulfonylureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propylimidazo[1,2-b]pyridazin-3-yl)sulfonyl)-3-(4,6-dimethoxypyrimidin-2-yl)urea;
   - triazines: ametryne, atrazine, cyanazine, dimethametryne, ethiozine, hexazinone, metamitron, metribuzine, prometryne, simazine, terbuthylazine, terbutryne, triaziflam;
   - ureas: chlortoluron, daimuron, diuron, fluometuron, isoproturon, linuron, methabenzthiazuron, tebuthiuron;
   - other acetolactate synthase inhibitors: bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalide, pyriminobac-methyl, pyrimisulfan, pyrithiobac, pyroxasulfon, pyroxsulam;
   - others: amicarbazone, aminotriazole, anilofos, beflubutamid, benazolin, bencarbazone, benfluresate, benzofenap, bentazone, benzobicyclon, bromacil, bromobutide, butafenacil, butamifos, cafenstrole, carfentrazone, cinidon-ethlyl, chlorthal, cinmethylin, clomazone, cumyluron, cyprosulfamid, dicamba, difenzoquat, diflufenzopyr, *Drechslera monoceras,* endothal, ethofumesate, etobenzanid, fentrazamide, flumiclorac-pentyl, flumioxazin, flupoxam, fluorochloridon, flurtamon, indanofan, isoxaben, isoxaflutol, lenacil, propanil, propyzamide, quinclorac, quinmerac, mesotrione, methylarsenic acid, naptalam, oxadiargyl, oxadiazone, oxaziclomefon, pentoxazone, pinoxaden, pyraclonil, pyraflufen-ethyl, pyrasulfotol, pyrazoxyfen, pyrazolynate, quinoclamin, saflufenacil, sulcotrione, sulfentrazone, terbacil, tefuryltrione, tembotrione, thiencarbazone, topramezone, 4-hydroxy-3-[2-(2-methoxyethoxymethyl)-6-trifluoromethylpyridin-3-carbonyl]bicyclo[3.2.1]oct-3-en-2-one, ethyl (3-[2-chloro-4-fluoro-5-(3-methyl-2,6-dioxo-4-trifluoromethyl-3,6-dihydro-2H-pyrimidin-1-yl)phenoxy]pyridin-2-yloxy)acetate, methyl 6-amino-5-chloro-2-cyclopropylpyrimidine-4-carboxylate, 6-chloro-3-(2-cyclopropyl-6-methylphenoxy)pyridazin-4-ol, 4-amino-3-chloro-6-(4-chlorophenyl)-5-fluoropyridin-2-carboxylic acid, methyl 4-amino-3-chloro-6-(4-chloro-2-fluoro-3-methoxyphenyl)pyridin-2-carboxylate and methyl 4-amino-3-chloro-6-(4-chloro-3-dimethylamino-2-fluorophenyl)pyridin-2-carboxylate;
**O) insecticides**
   - organo(thio)phosphates: acephate, azamethiphos, azinphos-methyl, chlorpyrifos, chlorpyrifos-methyl, chlorfenvinphos, diazinon, dichlorvos, dicrotophos, dimethoat, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
   - carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
   - pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin,
   - insect growth inhibitors: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazin; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramate;
   - nicotine receptor agonists/antagonists: clothianidin, dinotefuran, imidacloprid, thiamethoxam, nitenpyram, acetamiprid, thiacloprid, 1-(2-chlorothiazol-5-ylmethyl)-2-nitrimino-3,5-dimethyl-[1,3,5]triazinane;
   - GABA antagonists: endosulfan, ethiprole, fipronil, vaniliprole, pyrafluprole, pyriprole, N-5-amino-1-(2,6-dichloro-4-methylphenyl)-4-sulfinamoyl-1H-pyrazole-3-thiocarboxamide;
   - macrocyclic lactones: abamectin, emamectin, milbemectin, lepimectin, spinosad, spinetoram;
   - mitochondrial electron transport chain inhibitor (METI) I acaricides: fenazaquin, pyridaben, tebufenpyrad, tolfenpyrad, flufenerim;
   - METI II and III substances: acequinocyl, fluacyprim, hydramethylnone;
   - decouplers: chlorfenapyr;
   - inhibitors of oxidative phosphorylation: cyhexatin, diafenthiuron, fenbutatin oxide, propargite;
   - insect ecdysis inhibitors: cryomazin;
   - 'mixed function oxidase' inhibitors: piperonyl butoxide;
   - sodium channel blockers: indoxacarb, metaflumizon;
   - others: benclothiaz, bifenazate, cartap, flonicamid, pyridalyl, pymetrozin, sulfur, thiocyclam, flubendiamid, chlorantraniliprole, cyazypyr (HGW86); cyenopyrafen, flupyrazofos, cyflumetofen, amidoflumet, imicyafos, bistrifluron and pyrifluquinazone.

Examples of **safeners** are benoxacor, cloquintocet, cyometrinil, cyprosulfamide, dichlormid, dicyclonon, dietholate, fenchlorazole, fenclorim, flurazole, fluxofenim, furilazole, isoxadifen, mefenpyr, mephenate, naphthalic anhydride, oxabetrinil, 4-(dichloroacetyl)-1-oxa-4-azaspiro[4.5]decane (CAS 71526-07-3) and 2,2,5-trimethyl-3-(dichloroacetyl)-1,3-oxazolidine (CAS 52836-31-4).

Preferred pesticides comprise at least one pesticide with at least one **H-acidic group** (such as carboxylic acid group, phosphonic acid group, phosphinic acid group) or the anionic salts thereof (e.g., mono, di or tri salts). These anionic salts of the pesticides with an H-acidic group are also suitable as anionic pesticides in group A⁻. Preferred pesticides with an H-acidic group are herbicides with an H-acidic group. Examples of **herbicides** with an H-acidic group are amino acid analogs (such as **glyphosate** or glufosinate) or **imidazolinones** (such as imazamethabenz, imazamox, imazapic, imazapyr, imazaquin, imazethapyr).

Particularly preferred pesticides with an H-acidic group are glyphosate and glufosinate. In another preferred embodiment, pesticides with an H-acidic group are imidazolinones.

Especially preferably, the pesticide comprises a pesticide with an H-acidic group and one **further pesticide.** In another embodiment the pesticide comprises mixtures of at least two pesticides with an H-acidic group, and optionally further pesticides (such as at least one fungicide, herbicide, insecticide, and/or safener, with fungicides and/or herbicides being preferred).

In a further preferred embodiment, the pesticide comprises **glyphosate** (for example as the free acid, sodium salt, sesquisodium salt, potassium salt, dipotassium salt, ammonium salt, diammonium salt, dimethylammonium salt, trimesium salt or isopropylamine sale) or glufosinate (for example as the ammonium salt). With particular preference the pesticide comprises glyphosate (for example as the potassium salt, ammonium salt or isopropylamine salt). With particular preference the pesticide comprises glyphosate or glufosinate, and additionally a further herbicide. In another preferred embodiment the pesticide comprises glyphosate or glufosinate, and additionally a further pesticide (such as at least one fungicide, herbicide, insecticide and/or safener, with fungicides and/or herbicides being preferred).

Specifically preferably, the pesticide comprises **glyphosate and at least one further herbicide** selected from the following list:
acetochlor,acifluorofen, aclonifen, acrolein, alachlor, ametryn, amidosulfuron, amitrole, anilofos, asulam, atrazine, azafenidin, azimsulfuron, benazolin, benfluralin, benfuresate, bensulfuron-methyl, bensulide, bentazon, benzofenap, bialaphos, bifenox, bromacil, bromobutide, bromofenoxim, bromoxynil, butachlor, butamifos, butralin, butroxydim, butylate, cafenstrole, carbetamide, carfentrazone-ethyl, chlomethoxyfen, chloroamben, chlorobromuron, chloroidazon, chloroimuron-ethyl, chloronitrofen, chloroacetic acid, chlorotoluron, chloropropham, chlorosulfuron, chlorothal-dimethyl, chlorothiamid, cinmethylin, cinosulfuron, clethodim, clodinafop-propargyl, clomazone, clomeprop, clopyralid, cloransulam-methyl, cyanazine, cycloate, cyclosulfamuron, cycloxydim, cyhalofop-butyl, 2,4-D,2,4-DB, daimuron, dalapon, desmedipham, desmetryn, dicamba, dichlobenil, dichloroprop, diclofop-methyl, difenzoquat, diflufenican, dimefuron, dimepiperate, dimethachlor, dimethametryn, dimethenamid, dinitramine, dinoterb, diphenamid, diquat, dithiopyr, diuron, endothall, EPTC, esprocarb, ethalfluralin, ethametsulfuron-methyl, ethofumesate, ethoxysulfuron, etobenzanid, fenac, fenoxaprop, fenoxaprop-ethyl, fenuron, flamprop, flamprop-methyl, flazasulfuron, fluazifop-butyl, fluchloralin, flumetsulam, flumiclorac, flumiclorac-pentyl, flumioxazin, fluometuron, fluorochloridone, fluoroglycofen, fluoroglycofen-ethyl, flupoxam, flupropanate, flurenol, fluridone, fluroxypyr-1- methylheptyl, flurtamone, fluthiacet-methyl, fomesafen, fosamine, glufosinate, halosulfuron, haloxyfop-methyl, hexazinone, imazameth, imazamethabenz, imazamox, imazapic, imazapyr, imazaquin, imazethapyr, imazosulfuron, indanofan, ioxynil, isoproturon, isouron, isoxaben, isoxaflutole, isoxapyrifop, lactofen, lenacil, linuron, MCPA, MCPB, mecoprop, mefenacet, mesotrione, metamitron, metazachlor, methabenzthiazuron, methylarsonic acid, methyldymron, metobenzuron, metobromuron, metolachlor, metosulam, metoxuron, metribuzin, metsulfuron, molinate, monolinuron, naproanilide, napropamide, naptalam, neburon, nicosulfuron, nonanoic acid, norflurazon, orbencarb, oryzalin, oxadiargyl, oxadiazon, oxasulfuron, oxyfluorfen, paraquat, pebulate, pendimethalin, pentanochlor, pentoxazone, phenmedipham, picloram, piperophos, pretilachlor, primisulfuron, prodiamine, prometon, prometryn, propachlor, propanil, propaquizafop, propazine, propham, propisochlor, propyzamide, prosulfocarb, prosulfuron, pyraflufen-ethyl, pyrazolynate, pyrazosulfuron-ethyl, pyrazoxyfen, pyributicarb, pyridate, pyriminobac-methyl, quinclorac, quinmerac, quizalofop-ethyl, rimsulfuron, sethoxydim, siduron, simazine, simetryn, sulcotrione, sulfamic acid, sulfentrazone, sulfometuron, sulfosulfuron, TCA, tebutam, tebuthiuron, terbacil, terbumeton, terbuthylazine, terbutryn, thenylchlor, thiazopyr, thifensulfuron, thiobencarb, tiocarbazil, tralkoxydim, triallate, triasulfuron, tribenuron, 2,3,6-trichlorobenzoic acid, triclopyr, trietazine, trifluralin, triflusulfuron, vernolate.

In a further, specifically preferred embodiment, the pesticide comprises **imazamox and at least one further herbicide** selected from among the following classes b1) to b15):
b1) lipid biosynthesis inhibitors: chloroazifop, clodinafop, clofop, cyhalofop, diclofop, fenoxaprop, fenoxaprop-p, fenthiaprop, fluazifop, fluazifop-P, haloxyfop, haloxyfop-P, isoxapyrifop, metamifop, propaquizafop, quizalofop, quizalofop-P, trifop, alloxydim, butroxydim, clethodim, cloproxydim, cycloxydim, profoxydim, sethoxydim, tepraloxydim, tralkoxydim, butylae, cycloate, diallate, dimepiperate, EPTC, esprocarb, ethiolate, isopolinate, methiobencarb, molinate, orbencarb, pebulate, prosulfocarb, sulfallate, thiobencarb, tiocarbazil, triallate, vernolate, benfuresate, ethofumesate, bensulide and pinoxaden; b2) ALS inhibitors: amidosulfuron, azimsulfuron, bensulfuron, chloroimuron, chlorosulfuron, cinosulfuron, cyclosulfamuron, ethametsulfuron, ethoxysulfuron, flazasulfuron, flupyrsulfuron, foramsulfuron, halosulfuron, imazosulfuron, iodosulfuron, mesosulfuron, metsulfuron, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, imazamethabenz, imazapic, imazapyr, imazaquin, imazethapyr, cloransulam, diclosulam, florasulam, flumetsulam, metosulam, penoxsulam, bispyribac, pyriminobac, propoxycarbazone, flucarbazone, pyribenzoxim, pyriftalid, pyrithiobac, flucetosulfuron, orthosulfamuron, pyrimisulfan; b3) photosynthesis inhibitors: atraton, atrazine, ametryne, aziprotryne, cyanazine, cyanatryn, chloroazine, cyprazine, desmetryne, dimethametryne, dipropetryn, eglinazine, ipazine, mesoprazine, methometon, methoprotryne, procyazine, proglianzine, prometon, prometryne, propazine, sebuthylazne, secbumeton, simazine, simeton, simetryne, terbumeton, terbuthylazine, terbutryne, trietazine, ametridione, amibuzin, hexazinone, isomethiozin, metamitron, metribuzin, bromacil, isocil, lenacil, terbacil, brompyrazon, chloridazon, dimidazon, desmedipham, phenisopham, phenmedipham, phenmedipham-ethyl, benzthiazuron, buthiuron, ethidimuron, isouron, methabenzthiazuron, monisouron, tebuthiuron, thiazafluron, anisuron, buturon, chlorbromuron, chloreturon, chlorotoluron, chloroxuron, difenoxuron, dimefuron, diuron, fenuron, fluometuron, fluothiuron, isoproturon, linuron, methiuron, metobenzuron, metobromuron, metoxuron, monolinuron, monuron, neburon, parafluron, phenobenzuron, siduron, tetrafluron, thidiazuron, cyperquat, diethamquat, difenzoquat, diquat, morfamquat, paraquat, bromobonil, bromoxynil, chloroxynil, iodobonil, ioxynil, amicarbazone, bromofenoxim, flumezin, methazole, bentazone, propanil, pentanochlor, pyridate and pyridafol; b4) protoporphyringogen-IX oxidase inhibitors: acifluorofen, bifenox, chlomethoxyfen, chloronitrofen, ethoxyfen, fluorodifen, fluoroglycofen, fluoronitrofen, fomesafen, furyloxyfen, halosafen, lactofen, nitrofen, nitrofluorfen, oxyfluorfen, fluazolate, pyraflufen, cinidon-ethyl, flumiclorac, flumioxazin, flumipropyn, fluthiacet, thidiazimin, oxadiazon, oxadiargyl, azafenidin, carfentrazone, sulfentrazone, pentoxazone, benzfendizone, butafenacil, pyraclonil, profluazol, flufenpyr, flupropacil, nipyraclofen, etnipromid, saflufenacil and bencarbazone; b5) bleacher herbicides: metfluazon, norflurazon, flufenican, diflufenican, picolinafen, beflubutamid, fluridone, flurochloridone, flurtamone, mesotrione, sulcotrione, isoxachlortole, isoxaflutole, benzofenap, pyrazolynate, pyrazoxyfen, benzobicyclon, amitrole, clomazone, aclonifen, 4-(3-trifluoromethyl-phenoxy)-2-(4-trifluoromethylphenyl)pyrimidine, disclosed in EP 723960, topramezone, 4-hydroxy-3-{[2-methyl-6-(trifluoromethyl)-3-pyridinyl]carbonyl}bicyclo[3.2.1]oct-3-en-2-one, disclosed in WO 00/15615, 4-hydroxy-3-{[2-(2-methoxyethoxy)methyl-6-(trifluoromethy1)-3-pyridinyl]carbonyl}bicyclo[3.2.1]oct-3-en-2-one, disclosed in WO 01 /94339, 4-hydroxy-3-[4-(methylsulfonyl)-2-nitrobenzoyl]bicyclo[3.2.1]-oct-3-en-2-one, disclosed in EP 338992, 2-[2-chloro-4-(methylsulfonyl)-3-[(2,2,2-trifluoroethoxy)methyl]-3-hydroxy-3-cyclohexen-1-one (disclosed in DE 19846792) and pyrasulfotole; b6) EPSP synthase inhibitors: glyphosate; b7) glutamine synthase inhibitors: glufosinate and bilanaphos; b8) DHP synthase inhibitors: asulam; b9) mitosis inhibitors: benfluralin, butralin, dinitramine, ethalfluralin, fluchloralin, isopropalin, methalpropalin, nitralin, oryzalin, pendimethalin, prodiamine, profluralin, trifluralin, amiprofos-methyl, butamifos, dithiopyr, thiazopyr, propyzamide, tebutam, chlorthal, carbetamide, chlorbufam, chlorpropham and propham; b10) VLCFA inhibitors: acetochlor, alachlor, butachlor, butenachlor, delachlor, diethatyl, dimethachlor, dimethenamid, dimethenamid-P, metazachlor, metolachlor, S-metolachlor, pretilachlor, propachlor, propisochlor, prynachlor, terbuchlor, thenylchlor, xylachlor, allidochlor, CDEA, epronaz, diphenamid, napropamide, naproanilide, pethoxamid, flufenacet, mefenacet, fentrazamide, anilofos, piperophos, cafenstrole, indanofan and tridiphane; b11) cellulose biosynthesis inhibitors: dichlobenil, chlorthiamid, isoxaben and flupoxam; b12) decoupler herbicides: dinofenate, dinoprop, dinosam, dinoseb, dinoterb, DNOC, etinofen and medinoterb; b13) auxin herbicides: clomeprop, 2,4-D, 2,4,5-T, MCPA, MCPA thioethyl, dichlorprop, dichlorprop-P, mecoprop, mecoprop-P, 2,4-DB, MCPB, chloramben, dicamba, 2,3,6-TBA, tricamba, quinclorac, quinmerac, clopyralid, fluroxypyr, picloram, triclopyr, benazolin and aminopyralid; b14) auxin transport inhibitors: naptalam, diflufenzopyr; b15) benzoylprop, flamprop, flamprop-M, bromobutide, chlorflurenol, cinmethylin, methyldymron, etobenzanid, fosamine, metam, pyributicarb, oxaziclomefone, dazomet, triaziflam, methyl bromide.

The pesticide may be present in the form of an agrochemical **formulation,** water-soluble concentrates being preferred. Examples of formulations and their preparation are:
i) Water-soluble concentrates (SL, LS): 10 parts by weight of the active substances are dissolved using 90 parts by weight of water or a water-soluble solvent. Alternatively, wetters or other adjuvants are added. Upon dilution in water, the active substance dissolves. This gives a composition with an active substance content of 10% by weight.
ii) Dispersible concentrates (DC): 20 parts by weight of the active substances are dissolved in 70 parts by weight of cyclohexanone with addition of 10 parts by weight of a dispersant, for example polyvinylpyrrolidone. Upon dilution in water, a dispersion is obtained. The active substance content amounts to 20% by weight
iii) Emulsifiable concentrates (EC): 15 parts by weight of the active substances are dissolved in 75 parts by weight of xylene with addition of calcium dodecylbenzenesulfonate and castor oil ethoxylate (in each case 5 parts by weight). Upon dilution in water, an emulsion is obtained. The composition has an active substance content of 15% by weight.
iv) Emulsions (EW, EO, ES): 25 parts by weight of the active substances are dissolved in 35 parts by weight of xylene with addition of calcium dodecylbenzenesulfonate and castor oil ethoxylate (in each case 5 parts by weight). Using an emulsifier (for example Ultra-Turrax), this mixture is placed into 30 parts by weight of water and made into a homogeneous emulsion. Upon dilution in water, an emulsion results. The composition has an active substance content of 25% by weight.
v) Suspensions (SC, OD, FS): 20 parts by weight of the active substances are comminuted with addition of 10 parts by weight of dispersants and wetters and 70 parts by weight of water or an organic solvent in a stirred-ball mill to give a finely divided active substance suspension. Upon dilution in water, a stable suspension of the active substance is obtained. The active substance content in the composition amounts to 20% by weight.
vi) Water-dispersible and water-soluble granules (WG, SG): 50 parts by weight of the active substances are ground finely with addition of 50 parts by weight of dispersants and wetters and formulated as water-dispersible or water-soluble granules by means of technical apparatuses (for example extrusion, spray tower, fluidized bed). Upon dilution in water, a stable dispersion or solution of the active substance is obtained. The composition has an active substance content of 50% by weight.
vii) Water-dispersible and water-soluble powders (WP, SP, SS, WS): 75 parts by weight of the active substances are ground in a rotor-stator mill with addition of 25 parts by weight of dispersants and wetters and also silica gel. Upon dilution in water, a stable dispersion or solution of the active substance is obtained. The active substance content of the composition amounts to 75% by weight.
viii) Gels (GF): in a ball mill, 20 parts by weight of the active substances, 10 parts by weight of dispersant, 1 part by weight of gelling agent and 70 parts by weight of water or an organic solvent are ground to give a fine suspension. Upon dilution with water, a stable suspension with an active substance content of 20% by weight is obtained.
ix) Dusts (DP, DS): 5 parts by weight of the active substances are ground finely and mixed intimately with 95 parts by weight of finely divided kaolin. This gives a dust with an active substance content of 5% by weight.
x) Granules (GR, FG, GG, MG): 0.5 part by weight of the active substances is ground finely and associated with 99.5 parts by weight of carriers. Conventional methods to this end are extrusion, spray-drying or the fluidized bed. This gives granules for direct application with an active substance content of 0.5% by weight.
xi) ULV solutions (UL): 10 parts by weight of the active substances are dissolved in 90 parts by weight of an organic solvent, for example xylene. This gives a composition to be applied directly with an active substance content of 10% by weight.

In general, the formulation comprise from 0.01 to 95% by weight, preferably from 0.1 to 90% by weight, of the pesticides.

The user will generally use the tank mix according to the invention for use in a premetering device, in a knapsack sprayer, in a spray tank or in a spraying aircraft. Here, the formulation is brought to the desired use concentration with a liquid, usually water and/or buffer, optionally with addition of further auxiliaries, whereby the ready-to-use spray mixture (known as a tank mix) is obtained. Usually, 50 to 500 liters of the ready-to-use spray mixture are applied per hectare of utilizable agricultural area, preferably from 100 to 400 liters. In specific segments the amounts may also be above (e.g., fruit growing) or below (e.g., aircraft application) these amounts. In specific cases, such as, for example, aircraft application, it is also possible to use an organic solvent for making up the spray mixture, instead of water.

The pesticide concentrations in the tank mix may be varied within substantial ranges. In general, they are between 0.0001 and 10%, preferably between 0.01 and 1%.

The concentration of **the adjuvant** in the tank mix is in most cases in the range of from 0.01 to 50 g/l, preferably 0.08 to 10 g/l and in particular 0.2 to 8 g/l.

Depending on the nature of the desired effect, the application rates of the active substance when used in plant protection are between 0.001 and 2.0 kg of active substance per ha, preferably between 0.005 and 2 kg per ha, especially preferably between 0.05 and 0.9 kg per ha, in particular between 0.1 and 0.75 kg per ha.

The **application rate** of the **adjuvant** is in most cases in the range of from 10 to 3000 g/ha, preferably from 10 to 1000 g/ha, especially preferably from 80 to 750 g/ha and specifically from 200 to 400 g/ha.

The present invention furthermore relates to a method of **controlling** phytopathogenic fungi and/or undesired vegetation and/or undesired insect or mite attack and/or for regulating the growth of plants, wherein the tank mix according to the invention or the adjuvant according to the invention is allowed to act on the respective pests, their environment or the plants to be protected from the respective pest, on the soil and/or on undesirable plants and/or the crop plants and/or their environment.

Examples of suitable **crop plants** are cereals, for example wheat, rye, barley, triticale, oats or rice; beet, for example sugar or fodder beet; pome fruit, stone fruit and soft fruit, for example apples, pears, plums, peaches, almonds, cherries, strawberries, raspberries, currants or gooseberries; legumes, for example beans, lentils, peas, lucerne or soybeans; oil crops, for example oilseed rape, mustard, olives, sunflowers, coconut, cacao, castor beans, oil palm, peanuts or soybeans; cucurbits, for example pumpkins/squash, cucumbers or melons; fiber crops, for example cotton, flax, hemp or jute; citrus fruit, for example oranges, lemons, grapefruit or tangerines; vegetable plants, for example spinach, lettuce, asparagus, cabbages, carrots, onions, tomatoes, potatoes, pumpkin/squash or capsicums; plants of the laurel family, for example avocados, cinnamon or camphor; energy crops and industrial feedstock crops, for example maize, soybeans, wheat, oilseed rape, sugar cane or oil palm; maize; tobacco; nuts; coffee; tea; bananas; wine (dessert grapes and grapes for vinification); hops; grass, for example turf; sweetleaf (*Stevia rebaudania*); rubber plants and forest plants, for example flowers, shrubs, deciduous trees and coniferous trees, and propagation material, for example seeds, and harvested produce of these plants.

The term crop plants also includes those plants which have been modified by breeding, mutagenesis or **recombinant** methods, including the biotechnological agricultural products which are on the market or in the process of being developed. Genetically modified plants are plants whose genetic material has been modified in a manner which does not occur under natural conditions by hybridizing, mutations or natural recombination (i.e. recombination of the genetic material). Here, one or more genes will, as a rule, be integrated into the genetic material of the plant in order to improve the plant's properties. Such recombinant modifications also comprise posttranslational modifications of proteins, oligo- or polypeptides, for example by means of glycosylation or binding polymers such as, for example, prenylated, acetylated or farnesylated residues or PEG residues.

Examples which may be mentioned are plants which, as the result of plant-breeding and recombinant measures, have acquired a tolerance for certain classes of herbicides, such as hydroxyphenylpyruvate dioxygenase (HPPD) inhibitors, acetolactate synthase (ALS) inhibitors such as, for example, sulfonylureas (EP-A 257 993, US 5,013,659) or imidazolinones (for example US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073), enolpyruvylshikimate 3-phosphate synthase (EPSPS) inhibitors such as, for example, glyphosate (see, for example, WO 92/00377), glutamine synthetase (GS) inhibitors such as, for example, glufosinate (see, for example, EP-A 242 236, EP-A 242 246) or oxynil herbicides (see, for example, US 5,559,024). For example, breeding and mutagenesis have given rise to Clearfield® oilseed rape (BASF SE, Germany), which features tolerance for imidazolinones, for example imazamox. With the aid of recombinant methods, crop plants such as soybeans, cotton, maize, beet and oilseed rape have been generated which are resistant to glyphosate or glufosinate, and these are available by the brand names RoundupReady® (glyphosate-resistant, Monsanto, U.S.A.) and Liberty Link® (glufosinate-resistant, Bayer CropScience, Germany).

Also comprised are plants which, with the aid of recombinant measures, produce one or more toxins, for example those from the bacterial strain *Bacillus.* Toxins which are produced by such genetically modified plants comprise, for example, insecticidal proteins of *Bacillus* spp., in particular from *B. thuringiensis,* such as the endotoxins Cry1Ab, Cry1Ac, Cry1F, Cry1Fa2, Cry2Ab, Cry3A, Cry3Bb1, Cry9c, Cry34Ab1 or Cry35Ab1; or vegetable insecticidal proteins (VIPs), for example VIP1, VIP2, VIP3, or VIP3A; insecticidal proteins from nematode-colonizing bacteria, for example *Photorhabdus* spp. or *Xenorhabdus* spp.; toxins from animal organisms, for example wasp, spider or scorpion toxins; fungal toxins, for example from Streptomycetes; plant lectins, for example from pea or barley; agglutinins; proteinase inhibitors, for example trypsin inhibitors, serine protease inhibitors, patatin, cystatin or papain inhibitors; ribosome-inactivating proteins (RIPs), for example ricin, maize RIP, abrin, luffin, saporin or bryodin; steroid-metabolizing enzymes, for example 3-hydroxysteroid oxidase, ecdysteroid IDP glycosyl transferase, cholesterol oxidase, ecdysone inhibitors or HMG CoA-reductase; ion channel blockers, for example inhibitors of sodium or calcium channels; juvenile hormone esterase; receptors for the diuretic hormone (helicokinin receptors); stilbene synthase, bibenzyl synthase, chitinases and glucanases. These toxins can also be produced, in the plants, in the form of pretoxins, hybrid proteins, truncated or otherwise modified proteins. Hybrid proteins are distinguished by a novel combination of different protein domains (see, for example, WO 2002/015701). Further examples of such toxins or genetically modified plants which produce these toxins are disclosed in EP-A 374 753, WO 93/07278, WO 95/34656, EP-A 427 529, EP-A 451 878, WO 03/18810 and WO 03/52073. The methods for generating these genetically modified plants are known to the skilled worker and explained, for example, in the abovementioned publications. A large number of the abovementioned toxins impart to the plants which produce them a tolerance for pests from all taxonomic classes of the arthropods, in particular beetles (Coeleropta), dipterans (Diptera) and lepidopterans (Lepidoptera) and nematodes (Nematoda). Genetically modified plants which produce one or more genes which code for insecticidal toxins are described for example in the abovementioned publications and are in some cases commercially available such as, for example, YieldGard® (maize varieties which produce the toxin Cry1Ab), YieldGard® Plus (maize varieties which produce the toxins CrylAb and Cry3Bb1), Starlink® (maize varieties which produce the toxin Cry9c), Herculex® RW (maize varieties which produce the toxins Cry34Ab1, Cry35Ab1 and the enzyme phosphinothricin N-acetyltransferase [PAT]); NuCOTN® 33B (cotton varieties which produce the toxin Cry1Ac), Bollgard® I (cotton varieties which produce the toxin Cry1Ac), Bollgard® II (cotton varieties which produce the toxins CrylAc and Cry2Ab2); VIPCOT® (cotton varieties which produce a VIP toxin); NewLeaf® (potato varieties which produce the toxin Cry3A); Bt-Xtra®, NatureGard®, KnockOut®, BiteGard®, Protecta®, Bt11 (for example Agrisure® CB) and Bt176 from Syngenta Seeds SAS, France, (maize varieties which produce the toxin CrylAb and the PAT enzyme), MIR604 from Syngenta Seeds SAS, France (maize varieties which produce a modified version of the toxin Cry3A, see in this context WO 03/018810), MON 863 from Monsanto Europe S.A., Belgium (maize varieties which produce the toxin Cry3Bb1), IPC 531 from Monsanto Europe S.A., Belgium (cotton varieties which produce a modified version of the toxin Cry1Ac) and 1507 from Pioneer Overseas Corporation, Belgium (maize varieties which produce the toxin Cry1F and the PAT enzyme).

Also comprised are plants which, with the aid of recombinant measures, produce one or more proteins which bring about an increased resistance to, or ability to withstand, bacterial, viral or fungal pathogens such as, for example, so-called pathogenesis-related proteins (PR proteins, see EP-A 0 392 225), resistance proteins (for example potato varieties which produce two resistance genes against *Phytophthora infestans* from the Mexican wild potato *Solanum bulbocastanum*) or T4 lysozyme (for example potato varieties which, as the result of the production of this protein, are resistant to bacteria such as *Erwinia amylvora*).

Also comprised are plants whose productivity has been improved with the aid of recombinant methods, for example by increasing the yield potential (for example biomass, grain yield, starch content, oil content or protein content), the tolerance for drought, salt or other limiting environmental factors, or the resistance to pests and fungal, bacterial and viral pathogens. Also comprised are plants whose constituents, in particular for improving human or animal nutrition, have been modified with the aid of recombinant methods, for example by oil plants producing health-promoting long-chain omega-3-fatty acids or monounsaturated omega-9-fatty acids (for example Nexera® oilseed rape, DOW Agro Sciences, Canada).

The **advantages** of the invention are high stability of the adjuvant and of the tank mix, little wind-caused drift in the case of spray applications, good adhesion of the tank mix on the surface of the treated plants, increased permeation of the pesticides into the plant and, as a result, more rapid and enhanced activity. An important advantage is the low toxicity of the alkoxylates, in particular the low aquatic toxicity. Another advantage is the low harmful effect against crop plants, i.e., low phytotoxic effects. A further advantage is the simple handling of these alkoxides since, for example, no gelling takes place upon their incorporation into formulations. Another advantage is that no phase separation and no salt precipitation occurs in the adjuvant or in the tank mix; that the tank mix compatibility is increased; that the volatility of pesticides (e.g. auxin herbicides like dicamba, or 2,4-D) is reduced; that ammonium sulfate as tank mix additive may be no longer required, especially at alkaline pH of the tank mix; that the adjuvant is low foaming.

The examples which follow illustrate the invention without imposing any limitation.

### Examples

Surfactant A: Nonionic C8/10 alkylpolyglycosid (about 70 wt% active content and 30 wt% water), viscous liquid, HLB 13-14.
Surfactant B: Nonionic C8 alkylpolyglycosid (about 65 wt% active content and 35 wt% water), viscosity about 260-275 mPas (25 °C).
Surfactant C: Nonionic C6 alkylpolyglycosid (about 75 wt% active content and 25 wt% water), viscosity about 760-790 mPas (20 °C), surface tension about 34 mN/m (25°C, 0.1% DIN53914).
Surfactant D: ethoxylated C10-Guerbet alcohol (degree of ethoxylation = 3).
Surfactant E: C₁₀₋₁₃-alkylbenzene sulfonic acid, Bp 185-190 °C, Mp about -14 °C
Surfactant F: C₁₂₋₁₈ alcohol, ethoxylated and propoxylated, water-insoluble, solidifying point about -6 °C.
Antidrift A: Termix® 5910, commercially available from Huntsman, liquid at 25 °C, density at 25 °C 0,99 g/ml; pour point -28 °C, pH 6-8 (1% in water), viscosity 207 mPas (20 °C).
Antidrift B: Oleyl/cetyl alcohol, ethoxylated (3 EO).
Antidrift C: C16/18 alcohol, ethoxylated and propoxylated.
Antidrift D: Polyethylene glycol/polypropylene glycol/polyethylene glycol triblockpolymer, contains about 10wt% polyethylene glycol, total molar mass 2-3 kDa.
Antidrift E: Polyethylene glycol/polypropylene glycol/polyethylene glycol triblockpolymer, contains about 10wt% polyethylene glycol, total molar mass 3-4 kDa.
Antidrift F: Polypropylene glycol, molar mass about 4 kDa.
Crystallization Inhibitor A: Polyacrylic acid, molecular mass about 5000 g/mol, about 50wt% in water.
2-PH: Ethoxylated (10 EO) 2-propylheptylamine.
Corn Syrup A: High fructrose corn syrup, total solids 75-80%, 55% fructose and 41 % dextrose on dry basis, moisture 21-25 %.
PEG A: Polyethylene glycol, average molar mass about 200 g/mol.
Silicone: Mixture of polyether modified trisiloxane (10-20 %) and an organo modified polysiloxane, non-ionic, liquid, surface tension (22 °C, 0,1%) about 25 mN/m.

### Example 2 - Stability

The tank mix adjuvants A to F were mixed at room temperature under stirring as summarized in Table 2. All samples resulted in a homogenous liquid. The samples were stable when stored for six weeks at room temperature.

**Table 2:**

| | A | B | C | D | E | F |
|---|---|---|---|---|---|---|
| 2-PH | 25 | 25 | 25 | 25 | 180 | 180 |
| Surfactant A | 250 | 250 | 250 | 250 | 100 | 100 |
| Corn Syrup A | 250 | 200 | 200 | 200 | 200 | 200 |
| Surfactant D | | | | | 30 | 30 |
| Antidrift B | | 25 | 50 | 100 | 50 | 100 |
| Water | ad 1 L | ad 1 L | ad 1 L | ad 1 L | ad 1 L | ad 1 L |

### Example 3 - Stability

The tank mix adjuvants A to B were mixed at room temperature under stirring as summarized in Table 3. All samples resulted in a homogenous liquid. The samples were stable when stored for six weeks at room temperature.

**Table 3:**

| | A | B |
|---|---|---|
| 2-PH | 180 | 180 |
| Surfactant B | 100 | |
| Surfactant A | | 100 |
| Glycerol | Ad 1L | Ad 1L |
| Water | 75 | 75 |
| Surfactant D | 70 | 70 |
| Antidrift C | 200 | 200 |
| Antidrift D | | 80 |
| Antidrift E | 80 | |
| Antidrift F | 20 | 20 |

### Example 5 - Preparation of adjuvants

The adjuvants were prepared by mixing the components at room temperatur as indicated in the Tables 5 to 8.

**Table 5: Composition of adjuvant [g/l]**

| | A | B | C | D | E | F | G | H* |
|---|---|---|---|---|---|---|---|---|
| 2-PH | 180 | 150 | 180 | 250 | 250 | 150 | 180 | 180 |
| Antidrift C | 300 | | 250 | | | | 300 | |
| Surfactant B | | | | | 250 | 300 | 100 | |
| Surfactant A | 100 | 300 | 100 | 250 | | | | 100 |
| Surfactant E | 20 | | | | | | 20 | 20 |
| Surfactant D | | 50 | 70 | 50 | 50 | 50 | | |
| Water | 76.5 | | 82.8 | | | | 76.5 | |
| Glycerol | ad 1 l | ad 1 l | ad 1 l | ad 1 l | ad 1 l | ad 1 l | ad 1 l | ad 1 l |

| | | | | | | | | |
|---|---|---|---|---|---|---|---|---|
| * example not according to the invention | | | | | | | | |

**Table 6: Composition of adjuvant [g/l]**

| | A | B | C | D | E | F | G | H |
|---|---|---|---|---|---|---|---|---|
| 2-PH | 180 | 250 | 150 | 180 | 180 | 250 | 150 | 180 |
| Antidrift C | 300 | | | 250 | 300 | | | 300 |
| Surfactant B | | | | | | | 300 | 100 |
| Surfactant C | | | | | | 250 | | |
| Antidrift B | | 100 | 100 | 100 | 100 | 100 | 100 | 100 |
| Surfactant A | 100 | 250 | 300 | 100 | 100 | | | |
| Surfactant E | 20 | | | | 20 | | | 20 |
| Surfactant D | | 50 | 50 | 70 | | 50 | 50 | |
| Water | 6.5 | | | 82.8 | 7.65 | | | 76.5 |
| Glycerol | ad 1 l | ad 1 l | ad 1 l | ad 1 l | ad 1 l | ad 1 l | ad 1 l | ad 1 l |

**Table 7: Composition of adjuvant [g/l]**

| | A | B | C | D | H |
|---|---|---|---|---|---|
| 2-PH | 180 | 180 | 180 | 180 | 180 |
| Surfactant D | 300 | 150 | 200 | 200 | 200 |
| Surfactant F | | 150 | | | |
| Surfactant B | | | | | |
| Antidrift B | | 100 | 100 | 100 | 100 |
| Surfactant A | 100 | 100 | 100 | 100 | 100 |
| Surfactant E | 20 | 20 | | 20 | 20 |
| Surfactant D | | | 70 | | |
| Water | 76.5 | 76.5 | 76.5 | 76.5 | 76.5 |
| 1,2-Propylene glycol | | | | | ad 1 l |
| Glycerol | ad 1 l | ad 1 l | ad 1 l | ad 1 l | |

**Table 8: Composition of adjuvant [g/l]**

| | A | C | D | E | F | G | H |
|---|---|---|---|---|---|---|---|
| 2-PH | 180 | 180 | 180 | 180 | 180 | 180 | 180 |
| Antidrift C | | | | | 150 | 150 | |
| Antidrift C | 200 | 200 | 150 | 150 | | | 250 |
| Surfactant F | | | 150 | 150 | 150 | 150 | |
| Surfactant B | | | 100 | 100 | 100 | 100 | 100 |
| Antidrift B | | 100 | | | | | 150 |
| Surfactant A | 100 | 100 | | | | | |
| Silicone | 100 | | | | | 100 | |
| Surfactant E | 20 | 20 | | 20 | 20 | 20 | 20 |
| Surfactant D | | | 70 | | | | |
| Water | 76.5 | 76.5 | 76.5 | 76.5 | 76.5 | 76.5 | 76.5 |
| 1,2-Propylene glycol | ad 1 l | | ad 1 l | ad 1 l | ad 1 l | ad 1 l | |
| Glycerol | | | | | | | ad 1 l |
| PEG A | | ad 1 l | | | | | |

### Example 6 - Comparison of adjuvant activity

The adjuvants were prepared by mixing the components at room temperature as indicated in the Table 9.

**Table 9: Composition of adjuvant [g/l]**

| | A | Comp-A ^{a)} |
|---|---|---|
| 2-PH | 250 | - |
| Surfactant A | 250 | 250 |
| Surfactant D | 50 | 50 |
| Antidrift B | 100 | 100 |
| Glycerol | ad 1 l | ad 1 l |

| | | |
|---|---|---|
| a) comparative, not according to the invention. | | |

The adjuvant effect was tested in greenhouse trials on soya bean Oxford and common barnyard grass (*Echinochloa erecta*). The plants were sprayed with a mixture of potassium glyphosate (Touchdown® Hitech, an aqueous SL formulation containing 600 g/l potassium glyphosate; application rate 140 g active /ha), dicamba BAPMA (aqueous SL formulation containing 480 g/l dicamba, 160 g/l Antidrift B, and 0,05 wt% silicone antifoam; application rate 70 g active /ha), and adjuvant A or Comp-A according to Table 9 (application rate 1L /ha).

The herbicidal activity was evaluated 7, 14 and 21 days after treatment (DAT) by awarding scores to the treated plants in comparison to the untreated control plants (Table 11 and 12). The evaluation scale ranges from 0% to 100% activity. 100% activity means the complete death at least of those parts of the plant that are above ground. Conversely, 0% activity means that there were no differences between treated and untreated plants.

The results demonstrated the increased activity as a result of addition of the adjuvant.

**Table 11: Activity [%] after 7, 14 and 21 DAT (soya bean)**

| | 7 | 14 | 21 |
|---|---|---|---|
| Comp-A | 68 | 80 | 87 |
| A | 80 | 88 | 93 |

**Table 12: Activity [%] after 7, 14 and 21 DAT (barnyard grass)**

| | 7 | 14 | 21 |
|---|---|---|---|
| Comp-A | 32 | 73 | 85 |
| A | 38 | 87 | 96 |

### Example 7 - Comparison of adjuvant activity

The adjuvants were prepared by mixing the components at room temperature as indicated in the Table 13.

**Table 13: Composition of adjuvant [g/l]**

| | A | Comp-A ^{a)} |
|---|---|---|
| 2-PH | 250 | - |
| Surfactant A | 250 | 250 |
| Surfactant D | 50 | 50 |
| Antidrift B | 200 | 200 |
| Glycerol | ad 1 l | ad 1 l |

| | | |
|---|---|---|
| b) comparative, not according to the invention. | | |

The adjuvant effect was tested in greenhouse trials on Chinese lantern (Abutilon theophrasti) according to the procedure of Example 6.

The results in Table 14 demonstrated the increased activity as a result of addition of the adjuvant.

**Table 14: Activity [%] after 7, 14 and 21 DAT (Chinese lantern)**

| | 7 | 14 | 21 |
|---|---|---|---|
| Comp-A | 32 | 67 | 65 |
| A | 50 | 77 | 82 |

## Claims

1. An adjuvant comprising
a sugar-based surfactant; wherein the sugar-based surfactant contains alkyl polyglucosides;
a drift control agent comprising a fatty alcohol alkoxylate and a humectant; and an alkoxylate, wherein the alkoxylate is an amine alkoxylate (A) 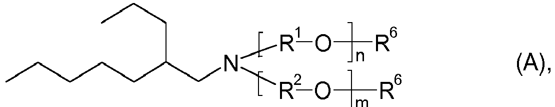 where
R¹ and R² independently of one another are ethylene, propylene, butylene or a mixture of these,
R⁶ is an H, C₁-C₆-alkyl, C₂-C₆-alkenyl, C₂-C₆-alkynyl, -SO₃R^{a}, -P(O)OR^{b}OR^{c}, -CH₂CO₂R^{d}, or -C(O)R^{e},
R^{a} and R^{d} independently of one another are an H, inorganic or organic cations,
R^{b} and R^{c} independently of one another are an H, inorganic or organic cations, C₁-C₆-alkyl, C₂-C₆-alkenyl or C₂-C₆-alkynyl,
R^{e} is C₁-C₂₂-alkyl, C₂-C₂₂-alkenyl, C₂-C₂₂-alkynyl, C₆-C₂₂-aryl or C₇-C₂₂-alkylaryl,
n, m independently of one another have a value of from 1 to 30.

2. The adjuvant according to claim 1, wherein the sugar-based surfactant contains a C₈₋₁₀-alkylpolyglucoside, with a D.P. of from 1.4 to 1.9.

3. The adjuvant according to claim 1 or 2, comprising 10 to 50 wt% of the sugar-based surfactant.

4. The adjuvant according to any of claims 1 to 3, comprising 1 to 45 wt% of the fatty alcohol alkoxylate.

5. The adjuvant according to any of claims 1 to 4, comprising 30 to 80 wt% of the humectant.

6. The adjuvant according to any of claims 1 to 5, wherein R¹ and R² independently of one another are ethylene, ethylene and propylene, ethylene and butylene, or ethylene, propylene and butylene.

7. The adjuvant according to any of claims 1 to 6, wherein the adjuvant is essentially free of pesticides.

8. The adjuvant according to any of claims 1 to 7, comprising
5 to 40 wt% of the sugar-based surfactant;
30 to 75 wt% of the humectant;
2 to 25 wt% of the drift control agent comprising a fatty alcohol alkoxylate;
5 to 40 wt% of the alkoxylate (A); and
optionally up to 15 wt% further auxiliaries, wherein the amounts of all components sum up to 100 wt%.

9. A method of preparing the adjuvant as defined in any of claims 1 to 8, by contacting
the sugar-based surfactant;
the drift control agent comprising a fatty alcohol alkoxylate and the humectant; and
the amine alkoxylate (A) of the amine alkoxylate (A).

10. A method for preparing a tank mix, which comprises the step of contacting a pesticide, water, and the adjuvant as defined in any of claims 1 to 8.

11. A method of controlling phytopathogenic fungi and/or undesired vegetation and/or undesired insect or mite attack and/or for regulating the growth of plants, wherein the tank mix according to claim 10 or the adjuvant according to any of claims 1 to 8 is allowed to act on the respective pests, their environment or the plants to be protected from the respective pest, on the soil and/or on undesired plants and/or the crop plants and/or their environment.

## Patentansprüche

1. Adjuvans, umfassend:
ein zuckerbasiertes Tensid, wobei das zuckerbasierte Tensid Alkylpolyglucoside enthält,
ein Abdriftsteuerungsmittel, umfassend ein Fettalkoholalkoxylat und ein Befeuchtungsmittel, und
ein Alkoxylat, wobei es sich bei dem Alkoxylat um ein Aminalkoxylat (A) handelt 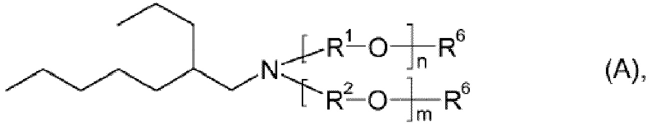 wobei
R¹ und R² unabhängig voneinander für Ethylen, Propylen, Butylen oder eine Mischung dieser stehen,
R⁶ für H, C₁-C₆-Alkyl, C₂-C₆-Alkenyl, C₂-C₆-Alkinyl, -SO₃R^{a}, -P(O)OR^{b}OR^{c}, -CH₂CO₂R^{d} oder -C(O)R^{e} steht,
R^{a} und R^{d} unabhängig voneinander für H oder ein anorganisches oder organisches Kation stehen,
R^{b} und R^{c} unabhängig voneinander für H, ein anorganisches oder organisches Kation, C₁-C₆-Alkyl, C₂-C₆-Alkenyl oder C₂-C₆-Alkinyl stehen,
R^{e} für C₁-C₂₂-Alkyl, C₂-C₂₂-Alkenyl, C₂-C₂₂-Alkinyl, C₆-C₂₂-Aryl oder C₇-C₂₂-Alkylaryl steht,
n, m unabhängig voneinander einen Wert von 1 bis 30 aufweisen.

2. Adjuvans nach Anspruch 1, wobei das zuckerbasierte Tensid ein C₈-C₁₀-Alkylpolyglucosid mit einem Polymerisationsgrad von 1,4 bis 1,9 enthält.

3. Adjuvans nach Anspruch 1 oder 2, umfassend 10 bis 50 Gew.-% an zuckerbasiertem Tensid.

4. Adjuvans nach einem der Ansprüche 1 bis 3, umfassend 1 bis 45 Gew.-% an Fettalkoholalkoxylat.

5. Adjuvans nach einem der Ansprüche 1 bis 4, umfassend 30 bis 80 Gew.-% an Befeuchtungsmittel.

6. Adjuvans nach einem der Ansprüche 1 bis 5, wobei R¹ und R² unabhängig voneinander für Ethylen, Ethylen und Propylen, Ethylen und Butylen oder Ethylen, Propylen und Butylen stehen.

7. Adjuvans nach einem der Ansprüche 1 bis 6, wobei das Adjuvans im Wesentlichen pestizidfrei ist.

8. Adjuvans nach einem der Ansprüche 1 bis 7, umfassend
5 bis 40 Gew.-% an zuckerbasiertem Tensid,
30 bis 75 Gew.-% an Befeuchtungsmittel,
2 bis 25 Gew.-% an ein Fettalkoholalkoxylat umfassendem Abdriftsteuerungsmittel,
5 bis 40 Gew.-% an Alkoxylat (A) und
gegebenenfalls bis zu 15 Gew.-% an weiteren Hilfsstoffen, wobei die Summe der Mengen aller Komponenten 100 Gew.-% beträgt.

9. Verfahren zur Herstellung des wie in einem der Ansprüche 1 bis 8 definierten Adjuvans, bei dem man
das zuckerbasierte Tensid,
das ein Fettalkoholalkoxylat und das Befeuchtungsmittel umfassende Abdriftsteuerungsmittel und
das Aminalkoxylat (A)
miteinander in Kontakt bringt.

10. Verfahren zur Herstellung einer Tankmischung, bei dem man ein Pestizid, Wasser und das wie in einem der Ansprüche 1 bis 8 definierte Adjuvans miteinander in Kontakt bringt.

11. Verfahren zur Bekämpfung phytopathogener Pilze und/oder unerwünschten Pflanzenwuchses und/oder unerwünschten Insekten- oder Milbenbefalls und/oder zum Regulieren des Wachstums von Pflanzen, bei dem man die Tankmischung nach Anspruch 10 oder das Adjuvans nach einem der Ansprüche 1 bis 8 auf die jeweiligen Schädlinge, ihre Umgebung oder die vor dem jeweiligen Schädling zu schützenden Pflanzen, auf den Boden und/oder unerwünschte Pflanzen und/oder die Kulturpflanzen und/oder ihre Umgebung ausbringt.

## Revendications

1. Adjuvant, comprenant
un agent tensioactif à base de sucre ; où l'agent tensioactif à base de sucre contient des alkylpolyglucosides ;
un agent de contrôle de la dérive comprenant un alcoxylate d'alcool gras et un humectant ; et
un alcoxylate, où l'alcoxylate est un alcoxylate d'amine (A) 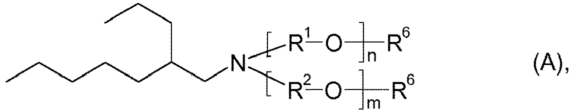 où
R¹ et R² sont indépendamment l'un de l'autre éthylène, propylène, butylène ou un mélange de ceux-ci,
R⁶ est H, C₁-C₆-alkyle, C₂-C₆-alcényle, C₂-C₆-alcynyle, - SO₃R^{a}, -P(O)OR^{b}OR^{c}, -CH₂CO₂R^{d}, ou -C(O)R^{e},
R^{a} et R^{d} sont indépendamment l'un de l'autre H, des cations inorganiques ou organiques,
R^{b} et R^{c} sont indépendamment l'un de l'autre H, des cations inorganiques ou organiques, C₁-C₆-alkyle, C₂-C₆-alcényle, ou C₂-C₆-alcynyle,
R^{e} est C₁-C₂₂-alkyle, C₂-C₂₂-alcényle, C₂-C₂₂-alcynyle, C₆-C₂₂-aryle ou C₇-C₂₂-alkylaryle,
n, m, indépendamment l'un de l'autre, possèdent une valeur allant de 1 à 30.

2. Adjuvant selon la revendication 1, dans lequel l'agent tensioactif à base de sucre contient un C₈-C₁₀-alkylpolyglucoside, ayant un D.P. allant de 1,4 à 1,9.

3. Adjuvant selon la revendication 1 ou 2, comprenant de 10 à 50% en poids de l'agent tensioactif à base de sucre.

4. Adjuvant selon l'une quelconque des revendications 1 à 3, comprenant de 1 à 45% en poids de l'alcoxylate d'alcool gras.

5. Adjuvant selon l'une quelconque des revendications 1 à 4, comprenant de 30 à 80% en poids de l'humectant.

6. Adjuvant selon l'une quelconque des revendications 1 à 5, dans lequel R¹ et R² sont indépendamment l'un de l'autre éthylène, éthylène et propylène, éthylène et butylène, ou éthylène, propylène et butylène.

7. Adjuvant selon l'une quelconque des revendications 1 à 6, où l'adjuvant est sensiblement dépourvu de pesticides.

8. Adjuvant selon l'une quelconque des revendications 1 à 7, comprenant
de 5 à 40% en poids de l'agent tensioactif à base de sucre ;
de 30 à 75% en poids de l'humectant ;
de 2 à 25% en poids de l'agent de contrôle de la dérive comprenant un alcoxylate d'alcool gras ;
de 5 à 40% en poids de l'alcoxylate (A) ; et éventuellement jusqu'à 15% en poids d'auxiliaires supplémentaires, où les quantités de tous les composants totalisent 100% en poids.

9. Méthode de préparation de l'adjuvant tel que défini selon l'une quelconque des revendications 1 à 8, par la mise en contact
de l'agent tensioactif à base de sucre ;
de l'agent de contrôle de la dérive comprenant un alcoxylate d'alcool gras et l'humectant ; et
de l'alcoxylate d'amine (A).

10. Méthode de préparation d'un mélange pour cuve, comprenant l'étape consistant à mettre en contact un pesticide, de l'eau, et l'adjuvant tel que défini selon l'une quelconque des revendications 1 à 8.

11. Méthode de contrôle de champignons phytopathogènes et/ou de végétation non désirée et/ou d'une attaque non désirée par des insectes ou des acariens et/ou de régulation de la croissance de plantes, où on permet au mélange pour cuve selon la revendication 10 ou à l'adjuvant selon l'une quelconque des revendications 1 à 8 d'agir sur les nuisibles respectifs, leur environnement ou les plantes à protéger contre le nuisible respectif, sur le sol et/ou sur des plantes non désirées et/ou les plantes de culture et/ou leur environnement.
